# EUROPÄISCHE PATENTSCHRIFT

(11) **EP 3 679 356 B1**
(45) Veröffentlichungstag und Bekanntmachung des Hinweises auf die Patenterteilung: **13.08.2025**
(21) Anmeldenummer: 18766227.5
(22) Anmeldetag: 06.09.2018
(51) Int. Cl.: G01N 21/90, G01B 11/24, G01J 3/10, G01J 3/46

(54) **INSPEKTIONSVORRICHTUNG MIT FARBBELEUCHTUNG**
INSPECTION DEVICE WITH COLOUR LIGHTING
DISPOSITIF D'INSPECTION COMPRENANT UN ÉCLAIRAGE DE COULEUR

(30) Priorität: 07.09.2017 DE 102017008406
(43) Veröffentlichungstag der Anmeldung: 15.07.2020
(73) Patentinhaber: Heuft Systemtechnik GmbH, 56659 Burgbrohl (DE)
(72) Erfinder: HEUFT, Bernhard, 56659 Burgbrohl (DE); NONNEN, Jörg, 53560 Vettelschoss (DE)
(74) Vertreter: Abitz & Partner
(86) Internationale Anmeldenummer: PCT/EP2018/074065
(87) Internationale Veröffentlichungsnummer: WO 2019/048575

(56) Entgegenhaltungen:
- EP-A2- 2 251 678
- WO-A1-2016/196886
- DE-A1- 102014 220 598
- DE-A1- 19 741 384

## Beschreibung

Die Erfindung betrifft ein Verfahren zur Inspektion von Behältern auf Verunreinigungen und dreidimensionale Behälterstrukturen. Die Vorrichtung umfasst eine Strahlungsquelle, die ausgebildet ist Strahlung zu emittieren. Die emittierte Strahlung durchstrahlt einen zu untersuchenden Behälter. Die Vorrichtung umfasst ferner eine Detektionseinrichtung, welche ausgebildet ist die Strahlung zu detektieren, welche von der Strahlungsquelle emittiert wurde und den Behälter durchstrahlt hat. Die Vorrichtung umfasst des Weiteren eine Auswerteeinrichtung, die ausgebildet ist die von der Detektionseinrichtung detektierte Strahlung auf Verschmutzungen und Beschädigungen des Behälters auszuwerten.

Die vorliegende Erfindung ist insbesondere zum Einsatz in automatischen Abfüllanlagen bestimmt, in denen die Behälter mit hohen Geschwindigkeiten transportiert werden. Insbesondere ist die Erfindung zur Inspektion von leeren Behältern bestimmt. In automatischen Abfüllanlagen werden leere Behälter vor der Befüllung auf mögliche Verunreinigungen oder Fremdkörper untersucht. Herkömmlicherweise werden die Behälter hierzu durch eine Inspektionseinrichtung geführt, die eine Lichtquelle für sichtbares Licht und eine Halbleiterkamera umfasst. Die Behälter werden dabei durchleuchtet und aus unterschiedlichen Blickwinkeln inspiziert. Bei der Inspektion werden Helligkeitsunterschiede festgestellt, wobei vorliegende Helligkeitsunterschiede als Verunreinigungen oder Verschmutzungen des Behälters identifiziert werden und der Behälter hierauf folgend ausgesondert wird. Derartig ausgesonderte Behälter können einer Reinigungsanlage zugeführt werden oder recycelt werden.

Behälter wie beispielsweise transparente Glasbehälter weisen oftmals Zier- oder Dekorelemente auf, die auf der Oberfläche des Behälters angeordnet sind. Derartige Dekorelemente werden auch als Embossings bezeichnet. Bei der Detektion von Verunreinigungen ergibt sich das Problem, dass derartige Dekorelemente lokale Helligkeitsunterschiede erzeugen können, die fälschlicherweise als Verunreinigungen identifiziert werden können. Dies kann zu einer fälschlichen Aussonderung von Behältern führen.

DE102014220598A1 offenbart eine Inspektionsvorrichtung und ein Verfahren zur Durchlichtinspektion von Behältern; DE19741384A1 befasst sich mit einem Verfahren zum Erkennen von diffus streuenden Materialien, Verunreinigungen und sonstigen Fehlern bei transparenten Gegenständen; WO2016196886A1 behandelt ein System und ein Verfahren zur Inspektion von Behältern mit mehreren Strahlungsquellen.

Es ist daher Aufgabe der vorliegenden Erfindung, die Zuverlässigkeit einer Vorrichtung zur Inspektion von Behältern auf Verunreinigungen und dreidimensionale Behälterstrukturen zu erhöhen, insbesondere Dekorelemente von Verunreinigungen und Verschmutzungen sicher unterscheiden zu können.

Dabei wird eine Vorrichtung zur Inspektion von Behältern auf Verunreinigungen und dreidimensionale Behälterstrukturen verwendet, die eine Strahlungsquelle umfasst. Die Strahlungsquelle ist ausgebildet Strahlung zu emittieren, die einen zu untersuchenden Behälter durchstrahlt. Die Vorrichtung umfasst ferner eine Detektionseinrichtung, welche ausgebildet ist die Strahlung zu detektieren, welche von der Strahlungsquelle emittiert wurde und den Behälter durchstrahlt hat. Die Vorrichtung weist außerdem eine Auswerteeinrichtung auf, die ausgebildet ist die von der Detektionseinrichtung detektierte Strahlung auf Verschmutzungen und Beschädigungen des Behälters auszuwerten. Die Detektionseinrichtung ist ferner dazu ausgebildet ist sowohl ein Helligkeitskontrastbild also auch ein Farbkontrastbild der Behälter zu erstellen. Die Auswerteeinrichtung ist ferner dazu ausgebildet ist das Helligkeitskontrastbild und das Farbkontrastbild miteinander zu vergleichen.

Die Strahlungsquelle weist mehrere räumlich getrennte Strahlungszonen auf. Die Strahlungszonen der Strahlungsquelle sind ausgebildet Strahlung unterschiedlicher Wellenlängenbereiche oder unterschiedlicher Intensität zu emittieren.

Die Vorrichtung nutzt zur Erhöhung der Inspektionsgenauigkeit den Effekt aus, dass Verschmutzungen und Verunreinigungen oder Scuffing-Ringe in der Regel als lichtabsorbierende Verunreinigungen vorliegen. Diese lichtabsorbierenden Verunreinigungen sorgen dafür, dass Strahlung, die den Behälter durchstrahlt, gedämpft wird. In anderen Worten wird die Helligkeit von Strahlung reduziert, welche auf Verunreinigungen trifft. Eine Lichtstreuung erfolgt bei derartigen Verunreinigungen degegen nicht, so dass bei der Abbildung dieser Verunreinigungen jeweils nur Licht aus einer Strahlungszone detektiert wird.

Anders verhalten sich demgegenüber Dekorelemente, Glasabplatzer, oder Wassertropfen, die sich auf dem zu untersuchenden Behälter befinden. An diesen Artefakten tritt Lichtbrechung auf, so dass an diesen Artefakten Strahlung aus unterschiedlichen Strahlungszonen auf die Detektionseinrichtung gelenkt wird.

Wenn, konventionellerweise, eine oder mehrere Lichtquellen zur Inspektion des Behälters eingesetzt werden, die einfarbiges Licht abgeben, d.h. Licht eines Wellenlängenbereichs, können Verunreinigungen gegebenenfalls nicht von Dekorelementen unterschieden werden. Durch die an Dekorelementen auftretende Lichtstreuung kann an Dekorelementen nämlich ein lokaler Helligkeitskontrast erzeugt werden, der dem Helligkeitskontrast ähnelt, den eine Verunreinigung hervorruft. Die vorliegende Erfindung ermöglicht eine Unterscheidung von Verunreinigungen und Dekorelementen.

Durch die Verwendung von unterschiedlichen Wellenlängenbereichen der Strahlung, die den zu untersuchenden Behälter durchstrahlt, treten an dreidimensionalen Behälterstrukturen wie z. B. Dekorelementen nämlich lokale Streuungseffekte auf, wodurch die räumlich getrennten Strahlungszonen der Strahlungsquelle erkannt werden können. Hierbei wird ausgenutzt, dass Dekorelemente Strukturen aufweisen, die zu einer starken Lichtstreuung führen. Somit werden in diesen kleinteiligen Strukturen mehrere Strahlungszonen abgebildet, während dies in gleichmäßig ausgebildeten Bereichen des Behälters und bei Verunreinigungen nicht der Fall ist. Dadurch, dass die Strahlungszonen Strahlung unterschiedlicher Wellenlängenbereiche emittieren, lässt sich im Bereich der dreidimensionalen Behälterstrukturen Strahlung unterschiedlicher Wellenlängen, also aus unterschiedlichen Strahlungszonen stammend, detektieren. Die dreidimensionalen Behälterstrukturen bilden großflächige Bereiche von Strahlungszonen auf kleine Bildbereiche in der Detektionseinrichtung ab. Behälter, welche eine Verunreinigung aufweisen, können auf diese Weise sicher aussortiert werden, während Behälter mit Dekorelementen unterschieden werden können.

Behälter können in einem nachfolgenden Verfahrensschritt korrekt ausgerichtet werden. Gegebenenfalls sollen nämlich die Behälter zum Aufbringen von Etiketten bezüglich der Dekorelemente eine spezielle Orientierung einnehmen. Durch die Detektion der Dekorelemente können die Behälter in dieser speziellen Orientierung mittels einer Drehvorrichtung ausgerichtet werden.

Vorzugsweise werden als unterschiedliche Wellenlängenbereiche Wellenlängenbereiche des sichtbaren Lichts verwendet. Beispielsweise können Strahlungszonen vorgesehen werden, die die Farben rot, grün und blau oder andere klar zu unterscheidende Farben aufweisen. In diesem Fall erscheint ein Dekorelement als Struktur, bei der mehrere Farben dicht beieinander liegen, während dies bei Verunreinigungen nicht der Fall ist. Es entsteht also bei Dekorelementen ein lokaler Farbkontrast, während bei Verunreinigungen lediglich ein lokaler Helligkeitskontrast entsteht und kein lokaler Farbkontrast. Die Strahlungszonen erzeugen in diesem Fall eine farbcodierte Beleuchtung, und Dekorelemente ändern den lokal vorherrschenden Farbton.

Alternativ, aber nicht als Bestandteil der beanspruchten Erfindung zu verstehen, können statt unterschiedlicher Wellenlängenbereiche auch unterschiedliche Intensitäten genutzt werden, um Dekorelemente wie Embossings von Verunreinigungen zu unterscheiden. Beispielsweise können mehrere helle und dunkle Strahlungszonen vorgesehen werden, die abwechselnd Licht emittieren und kein oder nur wenig Licht emittieren. Bei Verunreinigungen kann daraufhin wieder lediglich ein Helligkeitskontrast festgestellt werden, während Dekorelemente durch Lichtstreuung an den Dekorelementen nah beieinander liegende helle und dunkle Bereiche aufweisen.

Für eine Art von zu untersuchenden Behältern kann eine Normierung nach Behälterart durchgeführt werden. Verschiedene Behälterarten weisen beispielsweise verschiedene Farben und Lichtdurchlässigkeiten auf. Um eine Farbverzerrung und Helligkeitsverminderung durch die Behältereigenschaften zu berücksichtigen, wird daher eine Normierung vorgenommen. Bei der Normierung wird mindestens ein Behälter sorgfältig gesäubert und von der Detektionseinrichtung eine Aufnahme des Behälters detektiert. Die detektierte Aufnahme wird dann auf das Ausgangssignal, also z. B. auf die ursprünglich verwendeten Farben und auf die ursprünglich verwendete Helligkeit, normiert.

Der zu untersuchende Behälter kann zwischen der Strahlungsquelle und der Detektionseinrichtung platziert werden. Bei dieser Hellfeldbeleuchtung entsteht die in der Detektionseinrichtung detektierte Aufnahme durch Lichtabsorption und Lichtstreuung im und am Behälter. Alternativ kann der Behälter versetzt bzgl. der Achse Strahlungsquelle - Detektionseinrichtung platziert werden. In letzterem Fall liegt eine Dunkelfeldbeleuchtung vor, und die in der Detektionseinrichtung detektierte Aufnahme entsteht ausschließlich durch Lichtstreuung im und am Behälter.

Auch eine Kombination aus Hellfeldbeleuchtung und Dunkelfeldbeleuchtung ist denkbar. Vorzugsweise wird der zu untersuchende Behälter im optischen Weg zwischen einer ersten Lichtquelle und der Detektionseinrichtung platziert. Die erste Lichtquelle ist vorzugsweise eine Lichtquelle, die zur Bestimmung von Helligkeitskontrasten ausgebildet ist. Die erste Lichtquelle kann als einfarbige Lichtquelle mit relativ hoher Helligkeit ausgebildet sein. Zusätzlich kann eine oder mehrere zweite Lichtquelle(n) versetzt angeordnet sein, wodurch eine Dunkelfeldbeleuchtung bezüglich der zweiten Lichtquelle realisiert wird. Vorzugsweise ist die zweite Lichtquelle als Lichtquelle ausgebildet, die mehrere Strahlungszonen aufweist, um die Detektion eines Farbkontrastbildes zu ermöglichen. Beispielsweise können zweite Lichtquellen oberhalb und unterhalb des zu untersuchenden Behälters platziert werden. Auf diese Weise kann eine kombinierte Hell- und Dunkelfeldbeleuchtung erreicht werden, wobei die Hellfeldbeleuchtung im Wesentlichen zur Erzeugung des Helligkeitskontrastbildes verwendet werden kann und die Dunkelfeldbeleuchtung im Wesentlichen zur Erzeugung des Farbkontrastbildes verwendet werden kann.

Der Begriff der "Wellenlängenbereiche" bezeichnet die Wellenlängen, die von einer Strahlungszone emittiert werden. Hierbei handelt es sich um ein enges Wellenlängenspektrum. Vorzugweise emittieren die einzelnen Strahlungszonen Strahlung im Wesentlichen einer Wellenlänge, sodass an Dekorelementen ein klarer Kontrast detektiert werden kann.

Neben Dekorelementen können auch weitere dreidimensionale Behälterstrukturen von Verunreinigungen unterschieden werden. Beispielsweise können Wassertropfen oder bei Glasbehältern Glasabplatzer von Verunreinigungen unterschieden werden. Allgemein können alle Strukturen, welche eine lokale Lichtstreuung verursachen von Verunreinigungen unterschieden werden, die lediglich einen lokalen Helligkeitsunterschied von durchstrahlender Strahlung erzeugen.

Die Strahlungsquelle kann als flächiges Leuchtmittel ausgebildet sein, das im Wesentlichen einfarbiges, beispielsweise weißes sichtbares, Licht emittiert. Zwischen der Strahlungsquelle und den zu untersuchenden Behältern kann eine Farbfolie angebracht werden. Durch die Farbfolie werden die einzelnen Strahlungszonen realisiert. Die Farbfolie weist entsprechend mehrere farbige Bereiche auf, z. B. in den sieben Regenbogenfarben Rot, Orange, Gelb, Grün, Hellblau, Indigo und Violett, wodurch die einzelnen Strahlungszonen ausgebildet werden.

Alternativ kann die Strahlungsquelle mehrere Leuchtelemente aufweisen, die ausgebildet sind, Strahlung unterschiedlicher Wellenlängenbereiche zu emittieren. Bei den Leuchtelementen kann es sich vorzugsweise um verschiedenfarbige LEDs, LCDs oder OLEDs handeln. Die einzelnen Leuchtelemente können in diesem Fall, ggf. abhängig von der Behälterform, so angesteuert werden, dass gewünschte Strahlungszonen ausgebildet werden. Zur Ausbildung von Strahlungszonen mit homogener Strahlung kann ein Diffusor zwischen den mehreren Leuchtelementen und den zu untersuchenden Behältern angeordnet werden.

Die Strahlungsquelle ist vorzugsweise eine elektro-magnetische Strahlungsquelle, z. B. eine Strahlungsquelle für Licht im sichtbaren Bereich. Vorzugsweise emittieren die Strahlungszonen sichtbares Licht, welches deutlich voneinander unterschieden werden kann, z. B. rotes, grünes und blaues Licht. Auch andere Farben wie z. B. gelb sind denkbar. Die Strahlungsquelle kann ferner ausgebildet sein UV- oder Infrarotlicht oder eine Kombination hiervon zu emittieren. Infrarotstrahlung kann vorteilhafterweise bei farbigen Behältern, insbesondere bei braunen Glasflaschen, zum Einsatz kommen.

Die Strahlungsquelle kann gepulst betrieben werden und so gesteuert werden, dass die Strahlungsimpulse nur dann abgegeben werden, wenn sich ein zu untersuchender Behälter vor der Strahlungsquelle befindet. Alternativ kann die Strahlungsquelle kontinuierlich betrieben werden.

Die vorliegende Erfindung kann zur Inspektion von Behältern aus beliebigem transparentem Material eingesetzt werden. Besonders vorteilhaft lässt sich die Erfindung bei Behältern aus Glas oder transparenten Kunststoffen wie z. B. PET verwenden. Insbesondere ist die Erfindung zur Inspektion von Glasflaschen in der Getränkeindustrie anwendbar.

Die Strahlungszonen der Strahlungsquelle können derart ausgebildet werden, dass ein maximaler Kontrast auftritt zwischen Verunreinigungen und dreidimensionalen Glasstrukturen wie z. B. Embossings. Hierzu müssen mindestens zwei horizontale Strahlungszonen vorgesehen sein oder mindestens zwei vertikale Strahlungszonen. Strahlungszonen können streifen- oder kreisförmig ausgebildet sein, eine Krümmung oder eine vieleckige Struktur aufweisen. Die Strahlungszonen können im Wesentlichen jede geeignete Form haben, die einer Unterscheidung von Verunreinigungen und Dekorelementen dienlich ist.

Die Detektionseinrichtung ist vorzugsweise eine handelsübliche Farbkamera, insbesondere eine Halbleiterkamera. Ebenso können Infrarot- und UV-Kameras eingesetzt werden. Um Bewegungsunschärfe zu vermeiden bzw. zu reduzieren, können Shutter-Kameras mit kurzen Verschlusszeiten eingesetzt werden. Dies ist besonders von Vorteil, wenn die Strahlungsquelle kontinuierlich betrieben wird.

Vorzugsweise detektiert die Detektionseinrichtung eine Aufnahme von jedem zu untersuchenden Behälter. Hierdurch kann eine hohe Geschwindigkeit gewährleistet werden. Alternativ kann die Detektionseinrichtung von jedem zu untersuchenden Behälter mehrere Aufnahmen detektieren. Die Aufnahmen können zeitversetzt detektiert werden, beispielsweise zeitversetzt um 100 µs bis 1000 µs, bevorzugt 500 µs. Die zeitversetzten Aufnahmen werden vorzugsweise in Abhängigkeit der Transportgeschwindigkeit der zu untersuchenden Behälter detektiert. Da dreidimensionale Behälterstrukturen wie beispielsweise Dekorelemente Lichtstreuung erzeugen, können zeitversetzte Aufnahmen den auftretenden lokalen Farbkontrast im Bereich von Dekorelementen besser erkennen lassen. Auch ist denkbar mehrere Detektionseinrichtungen vorzusehen, welche jeweils zur Detektierung mindestens einer Aufnahme des zu untersuchenden Behälters ausgebildet sind. Vorzugsweise sind die Detektionseinrichtungen so angeordnet, dass sie Aufnahmen des zu untersuchenden Behälters von verschiedenen Aufnahmerichtungen anfertigen können.

Falls mehrere Aufnahmen von dem zu detektierenden Behälter angefertigt werden, kann die Strahlungsquelle zwischen den verschiedenen Aufnahmen angesteuert werden, so dass die Strahlungszonen zwischen Aufnahmen modifiziert werden. Für jede Aufnahme kann somit ein individuelles Farbmuster erzeugt werden. Beispielsweise können die Farben, welche von den Strahlungszonen emittiert werden, verändert werden. Alternativ oder zusätzlich kann die Form der Strahlungszonen variiert werden. Beispielsweise könnten bei einer ersten Aufnahme vertikale streifenförmige Strahlungszonen zum Einsatz kommen, während bei einer zweiten Aufnahme horizontale streifenförmige Strahlungszonen eingesetzt werden. Hierdurch können verschiedene dreidimensionale Strukturelemente, beispielsweise vertikale oder horizontal ausgerichtete Anteile der Dekorelemente, optimal hervorgehoben werden.

Die Auswerteeinrichtung ist vorteilhafterweise ausgebildet, die von der Detektionseinrichtung detektierte Aufnahme des zu untersuchenden Behälters in eine Aufnahme im HSV-Farbraum umzuwandeln. Bei der von der Detektionseinrichtung detektierten Aufnahme handelt es sich vorzugsweise um eine Aufnahme im RGB-Farbraum. Der HSV-Farbraum ergibt eine Farbwertaufnahme oder Farbwert H, eine Hellwertaufnahme oder Hellwert V und eine Sättigungsaufnahme oder Sättigung S. Die Hellwertaufnahme entspricht der Aufnahme einer konventionellen Inspektionsvorrichtung mit einer einfarbigen Strahlungsquelle und ermöglicht den Rückschluss auf lokale Helligkeitskontraste. Diese Helligkeitskontraste können Verunreinigungen oder aber dreidimensionale Dekorelemente darstellen. Das Farbwertsignal kann zur weiteren Auswertung herangezogen werden. Beispielsweise können lokale Helligkeitskontraste überprüft werden, indem dieser lokale Bereich auf das Vorliegen von Farbkontrasten überprüft wird. Zur Auswertung kommen geeignete Filter- und Klassifikationsverfahren zum Einsatz.

Falls lokal ein Helligkeitskontrast zu beobachten ist und gleichzeitig kein Farbkontrast in diesem Bereich vorliegt, wird von der Auswerteeinrichtung das Vorliegen einer Verunreinigung in diesem Bereich detektiert. Falls ein lokaler Helligkeitskontrast mit einem lokalen Farbkontrast zusammenfällt, wird von der Auswerteeinrichtung in diesem Bereich das Vorliegen einer dreidimensionalen Behälterstruktur wie z. B. eines Embossings detektiert. Die Sättigung kann ferner zur Beurteilung der Signifikanz des Farbkontrastsignals herangezogen werden.

Durch die Auswerteeinrichtung können ferner Strukturen identifiziert werden, welche im Wesentlichen keinen oder nur einen geringen lokalen Helligkeitskontrast verursachen aber einen lokalen Farbkontrast verursachen. Beispielsweise können Glasabplatzer oder Wassertropfen einen derartigen lokalen Farbkontrast verursachen, während durchscheinendes Licht diese Bereiche im Wesentlichen ohne Helligkeitsverlust durchstrahlen kann.

Die Auswerteeinrichtung kann ein Aussortieren von Behältern steuern in Abhängigkeit von der Auswertung des detektierten Signals. Vorzugsweise werden Behälter aussortiert, wenn eine Verschmutzung detektiert wurde und sichergestellt wurde, dass es sich hierbei nicht um eine dreidimensionale Behälterstruktur wie beispielsweise ein Dekorelement handelt. Es wird daher vorzugsweise ein Aussortieren eines Behälters vorgenommen, wenn ein lokaler Helligkeitskontrast von der Auswerteeinrichtung festgestellt wird, während kein lokaler Farbkontrast vorliegt. Auch kann ein Aussortieren von Behältern vorgenommen werden, wenn kein lokaler Helligkeitskontrast aber ein lokaler Farbkontrast vorliegt. In diesem Fall kann es sich um einen Glasabplatzer handeln. Falls der zu untersuchende Behälter keine Embossings oder andere dreidimensionale Strukturen aufweist, kann ein Behälter des Weiteren aussortiert werden, falls ein lokaler Helligkeitskontrast und ein lokaler Farbkontrast detektiert wird.

Die Erfindung betrifft ein Verfahren zur Inspektion von Behältern auf Verunreinigungen und dreidimensionale Behälterstrukturen gemäß Anspruch 1. Das Verfahren umfasst die folgenden Schritte:
- Bereitstellen einer Strahlungsquelle, wobei die Strahlungsquelle ausgebildet ist Strahlung zu emittieren, die einen zu untersuchenden Behälter durchstrahlt, wobei die Strahlungsquelle mehrere räumlich getrennte Strahlungszonen aufweist, und wobei die Strahlungszonen ausgebildet sind Strahlung unterschiedlicher Wellenlängenbereiche zu emittieren,
- Bereitstellen einer Detektionseinrichtung, welche ausgebildet ist die Strahlung zu detektieren, welche von der Strahlungsquelle emittiert wurde und den Behälter durchstrahlt hat,
- Bereitstellen einer Auswerteeinrichtung, die ausgebildet ist die von der Detektionseinrichtung detektierte Strahlung auf Verschmutzungen und Beschädigungen des Behälters auszuwerten,
- Emittieren, durch die Strahlungszonen der Strahlungsquelle, von Strahlung unterschiedlicher Wellenlängenbereiche, wobei die Strahlung den zu untersuchenden Behälter durchstrahlt,
- Detektieren, durch die Detektionseinrichtung, der Strahlung, wobei die Strahlung von den Strahlungszonen der Strahlungsquelle emittiert wurde und den zu untersuchenden Behälter durchstrahlt hat, und
- Auswerten, durch die Auswerteeinrichtung, der von der Detektionseinrichtung detektierten Strahlung auf Verschmutzung und Beschädigungen des zu untersuchenden Behälters, wobei gleichzeitig ein Helligkeitskontrastbild und ein Farbkontrastbild erstellt wird und die Auswerteeinrichtung einen Vergleich des Helligkeitskontrastbilds und des Farbkontrastbilds vornimmt.

Bei dem erfindungsgemäßen Verfahren wird mittels der Detektionseinrichtung ein Helligkeitskontrastbild und ein Farbkontrastbild erstellt. Über die Auswerteeinrichtung wird anschließend ein Vergleich des Helligkeitskontrastbilds und des Farbkontrastbilds vorgenommen.

Die Auswertung kann dabei so erfolgen, dass es als eine Verunreinigung einer Flasche angesehen wird, wenn in einem Bereich der Aufnahmen ein Kontrast im Helligkeitskontrastbilds festgestellt wird und in demselben Bereich kein Kontrast im Farbkontrastbilds detektiert wird.

Die Auswertung kann dabei ferner so erfolgen, dass es als ein Embossing angesehen wird, wenn in einem Bereich der Aufnahmen sowohl ein Kontrast im Helligkeitskontrastbilds als auch im Farbkontrastbilds detektiert wird.

Die Auswertung kann dabei ferner so erfolgen, dass es als ein Wassertropfen oder ein Glasabplatzer angesehen wird, wenn in einem Bereich der Aufnahmen kein Kontrast im Helligkeitskontrastbilds, aber in demselben Bereich ein Kontrast im Farbkontrastbilds detektiert wird. Eine Unterscheidung zwischen einem Glasabplatzter und einem Wassertropfen kann dann anhand der Form, Größe und Symmetrie des Kontrasts im Farbkontrastbilds vorgenommen werden.

Im Folgenden wird die vorliegende Erfindung durch die beiliegenden Zeichnungen näher beschrieben. Hierbei zeigt:
- Figur 1: die erfindungsgemäße Inspektionsvorrichtung,
- Figur 2: verschiedene Ausführungsformen der Strahlungsquelle und der Strahlungszonen,
- Figur 3: einen Behälter mit einem Glasperlendekor,
- Figur 4: einen Behälter mit Wassertropfen,
- Figur 5: einen Behälter mit einem Glasabplatzer,
- Figur 6: eine illustrative Darstellung der Detektion von lichtabsorbierender Verunreinigung, und
- Figur 7: eine illustrative Darstellung der Detektion einer dreidimensionalen Behälterstruktur.

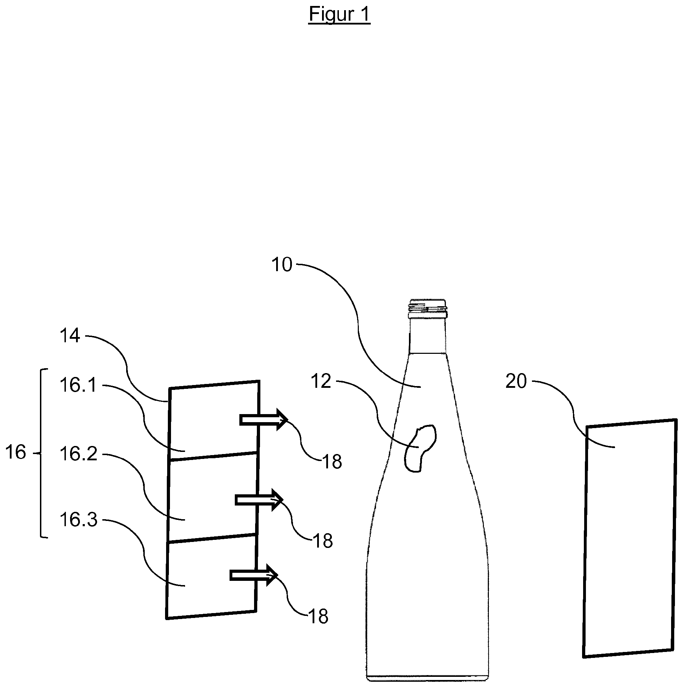

In Figur 1 ist eine Inspektionsvorrichtung abgebildet. In der Inspektionsvorrichtung werden Behälter 10 wie z.B. Glasflaschen auf Verunreinigungen und Verschmutzungen untersucht. Gleichzeitig wird gewährleistet, dass Dekorelemente wie z. B. Embossings nicht als Verunreinigungen identifiziert werden. Der in Figur 1 abgebildete Behälter 10 weist eine Verunreinigung 12 auf.

Zur Identifizierung der Verunreinigung 12 ist eine Strahlungsquelle 14 vorgesehen. Die Strahlungsquelle 14 weist mehrere Strahlungszonen 16 auf. Die Strahlungsquelle 14 kann als flächige homogen strahlende Strahlungsquelle ausgebildet sein. In diesem Fall befindet sich zwischen der Strahlungsquelle 14 und dem Behälter 10 eine farbige Folie. Durch die farbige Folie werden die Strahlungszonen 16 realisiert. Beispielsweise können eine rote Strahlungszone 16.1, eine grüne Strahlungszone 16.2 und eine blaue Strahlungszone 16.3 vorgesehen sein. Alternativ weist die Strahlungsquelle 14 eine Vielzahl von ansteuerbaren verschiedenfarbigen LEDs auf, durch welche die Strahlungszonen 16 realisiert werden können.

Die Strahlungszonen 16 emittieren Strahlung in Richtung des zu untersuchenden Behälters 10. Bei der Strahlung handelt es sich vorzugsweise um sichtbares Licht 18. Das Licht 18 durchstrahlt den Behälter 10 und wird von einer Detektionseinrichtung 20 detektiert. Bei der Detektionseinrichtung 20 handelt es sich vorzugsweise um eine Halbleiterkamera.

Licht 18 welches auf die Verunreinigung 12 trifft wird abgeschwächt. Die Detektionseinrichtung 20 detektiert an dieser Stelle somit eine Aufnahme des Behälters 10 mit lokal verminderter Helligkeit an der Stelle der Verunreinigung 12, d.h. mit einem lokalen Helligkeitskontrast.

Die von der Detektionseinrichtung 20 detektierte Aufnahme des Behälters 10 wird an eine Auswerteeinrichtung geleitet. Die Auswerteeinrichtung wandelt die Aufnahme des Behälters 10 in eine Aufnahme im HSV Farbraum um. Hierdurch werden eine Farbwertaufnahme, eine Sättigungsaufnahme und eine Helligkeitsaufnahme der ursprünglichen Aufnahme erhalten.

Zur Auswertung ermittelt die Auswerteeinrichtung, ob die Helligkeitsaufnahme lokale Helligkeitskontraste, d. h. Stellen mit lokal verminderter Helligkeit aufweist. In dem Fall, dass lokale Helligkeitskontraste vorliegen, liegt entweder eine Verunreinigung 12 oder eine dreidimensionale Behälterstruktur wie ein Dekorelement vor. Eine dreidimensionale Behälterstruktur streut nämlich das Licht 18, welches von der Strahlungsquelle 14 durch den Behälter 10 zur Detektionseinrichtung 20 gelangt.

Falls ein Helligkeitskontrast vorliegt, vergleicht die Auswerteeinrichtung die Helligkeitsaufnahme an der Stelle des Helligkeitskontrasts mit der Farbwertaufnahme an dieser Stelle. Falls an dieser Stelle neben dem Helligkeitskontrast auch ein Farbkontrast in der Farbaufnahme zu erkennen ist, handelt es sich nicht um eine Verunreinigung, da Verunreinigungen lediglich die Helligkeit reduzieren. In diesem Fall handelt es sich daher um eine dreidimensionale Behälterstruktur wie ein Glasdekor und der Behälter 10 wird nicht aussortiert. Liegt an der Stelle des lokalen Helligkeitskontrasts allerdings kein lokaler Farbkontrast vor, wird eine Verunreinigung 12 festgestellt und der Behälter 10 aussortiert.

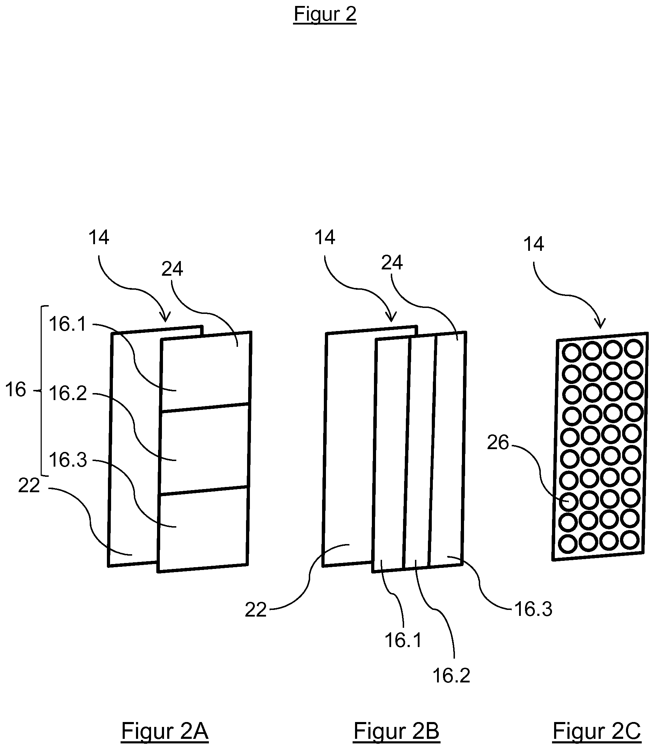

Figur 2 zeigt verschiedene Ausführungsformen der Strahlungsquelle 14 und der Strahlungszonen 16. In Figur 2A zeigt ein flächiges Leuchtmittel 22 der Strahlungsquelle 14. Vor dem Leuchtmittel 22 zwischen der Strahlungsquelle 14 und dem Behälter 10 ist eine farbige Folie 24 angeordnet. Die farbige Folie 24 weist mehrere farbige Bereiche auf, die den Strahlungszonen 16 entsprechen. Figur 2A zeigt hierbei Strahlungszonen 16, die eine im Wesentlichen horizontale Erstreckung aufweisen. Alternativ, und in Figur 2B gezeigt, können die Strahlungszonen 16 ebenfalls eine vertikale Erstreckung aufweisen. Figur 2C zeigt eine weitere Ausführungsform der Strahlungsquelle 14. Gemäß dieser Ausführungsform weist die Strahlungsquelle 14 eine Vielzahl von LEDs 26, LCDs 26 oder OLEDs 26 auf. Die LEDs 26 können angesteuert werden und hierdurch gewünschte Strahlungszonen 16 erzeugen. Beispielsweise ist eine Vielzahl von roten, grünen und blauen LEDs 26 vorgesehen.

Vorzugsweise wird durch die Detektionseinrichtung 20 eine Aufnahme des Behälters 10 detektiert, welche anschließend von der Auswerteeinrichtung ausgewertete wird. Alternativ können mehrere Aufnahmen des Behälters 10 vorgenommen werden. Für diese Aufnahmen kann die Strahlungsquelle 14 so angesteuert werden, dass für die Aufnahmen unterschiedliche Strahlungszonen 16 ausgebildet werden. Beispielsweise können die in Figur 2C gezeigten LEDs 26 für eine erste Aufnahme horizontale Strahlungszonen 16 erzeugen und für eine zweite Aufnahme vertikale Strahlungszonen 16 erzeugen. Hierdurch können Verunreinigungen und dreidimensionale Behälterelemente wie Embossings, die eine im Wesentlichen horizontale oder vertikale Ausrichtung haben, optimal detektiert werden.

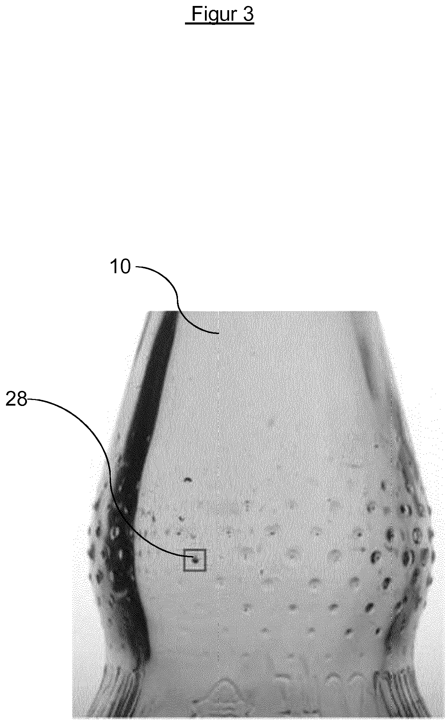

Figur 3 zeigt einen Behälter 10 mit einem Glasperlendekor. Figur 3 zeigt Helligkeitskontraste im Bereich einiger Dekorelemente 28. Diese Dekorelemente 28 sind keine Verunreinigungen und sollen daher nicht zum Aussortieren der Behälter 10 führen. Durch die dreidimensionale Struktur der Dekorelemente 28 kommt es an den Randbereichen der Dekorelemente 28 zu starken Lichtstreuungseffekten. Bei der Verwendung von verschiedenfarbigen Strahlungszonen 16 kann daher in der Farbwertaufnahme ein Farbkontrast an den Randbereichen der Dekorelemente 28 festgestellt werden. Somit kann ein Dekorelement 28 trotz erzeugtem Helligkeitskontrast von einer Verunreinigung unterschieden werden und als Glasperlenartefakt klassifiziert werden.

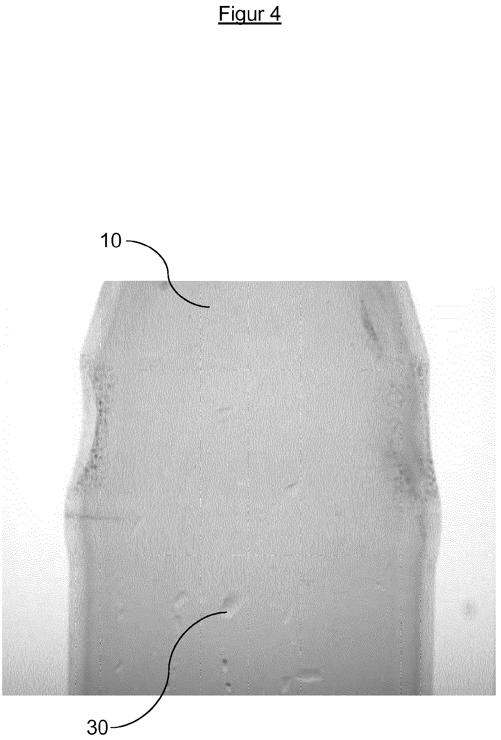

Figur 4zeigt einen Behälter 10 mit Wassertropfen 30. Die Wassertropfen 30 erzeugen einen geringen Helligkeitskontrast. Im unteren Bereich der Wassertropfen 30 erzeugen diese allerdings einen Farbkontrast. Wassertropfen 30 können somit durch die Verwendung sowohl der Helligkeitsaufnahme wie auch der Farbwertaufnahme von Verunreinigungen 12 unterschieden werden. Hierdurch kann eine bessere Filterung von Störungen durch Wassertropfen 30 erreicht werden.

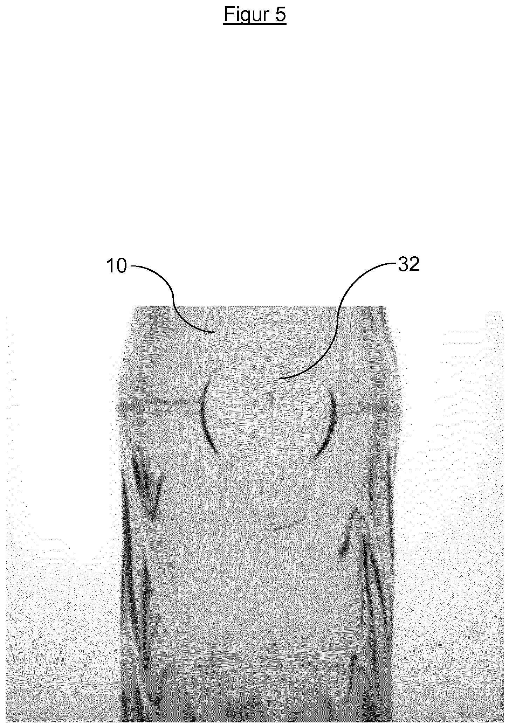

Figur 5zeigt einen Behälter 10 mit einem Glasabplatzer 32. Ähnlich einem Wassertropfen 30 erzeugen Glasabplatzer 32 oftmals einen geringen Helligkeitskontrast. Allerdings lassen sich bei Glasabplatzern 32 großflächige Farbkontraste beobachten. Somit können auch Glasabplatzer 32 durch die Verwendung sowohl der Helligkeitsaufnahme wie auch der Farbwertaufnahme von Verunreinigungen 12 unterschieden werden.

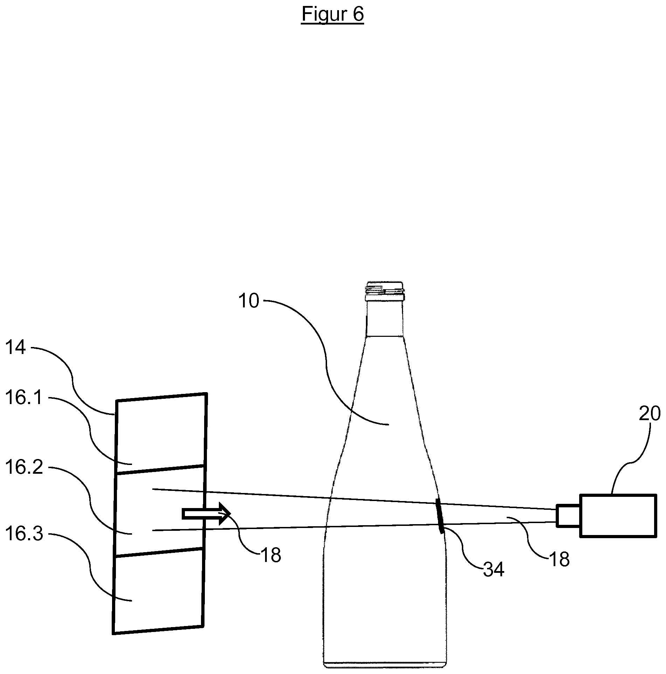

In Figur 6 ist ein Behälter 10 mit einer lichtabsorbierenden Verunreinigung 34 gezeigt. Das Licht 18, welches von einer Strahlungszone 16.2 der Strahlungsquelle 14 emittiert wird, durchstrahlt die lichtabsorbierenden Verunreinigung 34 und gelangt in die Detektionseinrichtung 20. Bei der Auswertung der Aufnahme der Detektionseinrichtung 20 wird festgestellt, dass die Intensität des Lichts 18 durch die lichtabsorbierenden Verunreinigung 34 abgenommen hat, aber keine Lichtstreuung aufgetreten ist. Die Aufnahme der Detektionseinrichtung 20 weist daher in dem in Figur 6 gezeigten Fall im Bereich der lichtabsorbierenden Verunreinigung 34 einen lokalen Helligkeitskontrast auf. In diesem Bereich ist allerdings kein lokaler Farbkontrast zu beobachten.

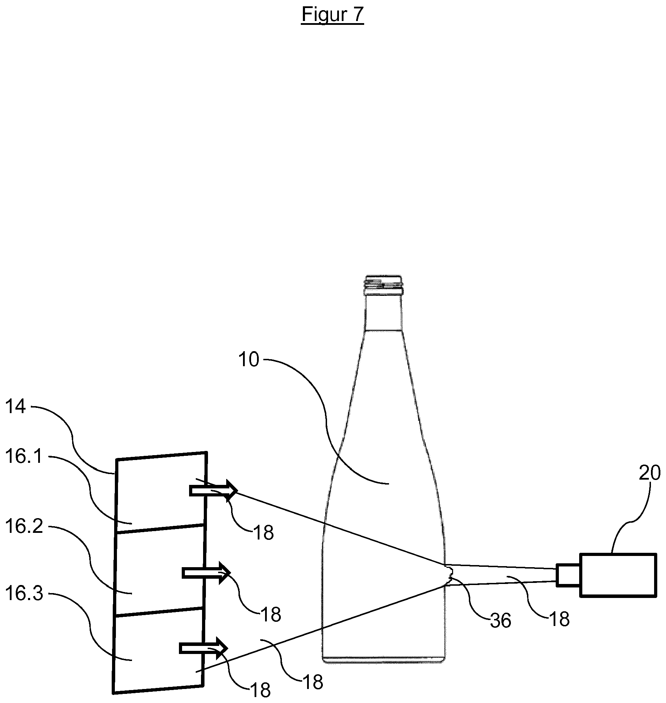

In Figur 7 ist der Fall gezeigt, dass sich im optischen Weg zwischen der Strahlungsquelle 14 und der Detektionseinrichtung 20 eine dreidimensionale Behälterstruktur 36 befindet. Durch die dreidimensionale Behälterstruktur 36 wird das von den Strahlungszonen 16.1, 16.2, 16.3 kommende Licht 18 gestreut. In der Aufnahme der Detektionseinrichtung 20 kann im Bereich der dreidimensionalen Behälterstruktur 36 daher Licht 18 mehrerer Strahlungszonen 16.1, 16.2, 16.3 beobachtet werden. Im Gegensatz zur lichtabsorbierenden Verunreinigung 34, wie in Figur 6 gezeigt, wird somit im Bereich der dreidimensionalen Behälterstruktur 36 ein lokaler Farbkontrast beobachtet, der zur Unterscheidung einer lichtabsorbierenden Verunreinigung 34 von einer dreidimensionalen Behälterstruktur 36 benutzt wird.

## Patentansprüche

1. Verfahren zur Inspektion von Behältern auf Verunreinigungen und dreidimensionale Behälterstrukturen, wobei das Verfahren folgende Schritte umfasst:
- Bereitstellen einer Strahlungsquelle, wobei die Strahlungsquelle ausgebildet ist Strahlung zu emittieren die einen zu untersuchenden Behälter durchstrahlt, wobei die Strahlungsquelle mehrere räumlich getrennte Strahlungszonen aufweist, und wobei die Strahlungszonen ausgebildet sind Strahlung unterschiedlicher Wellenlängenbereiche zu emittieren,
- Bereitstellen einer Detektionseinrichtung, welche ausgebildet ist die Strahlung zu detektieren, welche von der Strahlungsquelle emittiert wurde und den Behälter durchstrahlt hat,
- Bereitstellen einer Auswerteeinrichtung, die ausgebildet ist die von der Detektionseinrichtung detektierte Strahlung auf Verschmutzungen und Beschädigungen des Behälters auszuwerten,
- Emittieren, durch die Strahlungszonen der Strahlungsquelle, von Strahlung unterschiedlicher Wellenlängenbereiche, wobei die Strahlung den zu untersuchenden Behälter durchstrahlt,
- Detektieren, durch die Detektionseinrichtung, der Strahlung, wobei die Strahlung von den Strahlungszonen der Strahlungsquelle emittiert wurde und den zu untersuchenden Behälter durchstrahlt hat, und
- Auswerten, durch die Auswerteeinrichtung, der von der Detektionseinrichtung detektierten Strahlung auf Verschmutzung und Beschädigungen des zu untersuchenden Behälters,
wobei gleichzeitig ein Helligkeitskontrastbild und ein Farbkontrastbild erstellt wird, und die Auswerteeinrichtung einen Vergleich des Helligkeitskontrastbilds und des Farbkontrastbilds vornimmt.

2. Verfahren nach Anspruch 1, wobei die Auswertung so erfolgt, dass es als eine Verunreinigung einer Flasche angesehen wird, wenn in einem Bereich der Aufnahmen ein Kontrast im Helligkeitskontrastbilds festgestellt wird und in demselben Bereich kein Kontrast im Farbkontrastbilds detektiert wird.

3. Verfahren nach einem der vorherigen Ansprüche, wobei die Auswertung so erfolgt, dass es als ein Embossing angesehen wird, wenn in einem Bereich der Aufnahmen sowohl ein Kontrast im Helligkeitskontrastbild als auch im Farbkontrastbild detektiert wird.

4. Verfahren nach einem der vorherigen Ansprüche, wobei die Auswertung so erfolgt, dass es als ein Wassertropfen oder ein Glasabplatzer angesehen wird, wenn in einem Bereich der Aufnahmen kein Kontrast im Helligkeitskontrastbild, aber in demselben Bereich ein Kontrast im Farbkontrastbild detektiert wird.

5. Verfahren nach Anspruch 4, wobei eine Unterscheidung zwischen einem Glasabplatzer und einem Wassertropfen anhand der Form, Größe und Symmetrie des Kontrasts im Farbkontrastbild vorgenommen wird.

6. Verfahren nach einem der vorherigen Ansprüche, wobei die Strahlungszonen der Strahlungsquelle ausgebildet sind sichtbares Licht, Infrarotstrahlung und/oder Ultraviolettstrahlung zu emittieren.

7. Verfahren nach Anspruch 6, wobei eine erste Strahlungszone der Strahlungsquelle ausgebildet ist sichtbares rotes Licht zu emittieren, eine zweite Strahlungszone der Strahlungsquelle ausgebildet ist sichtbares grünes Licht zu emittieren und eine dritte Strahlungszone der Strahlungsquelle ausgebildet ist sichtbares blaues Licht zu emittieren.

8. Verfahren nach einem der vorherigen Ansprüche, wobei die Strahlungsquelle ein flächiges Leuchtmittel aufweist, welches ausgebildet ist im Wesentlichen weißes sichtbares Licht zu emittieren, und wobei die Strahlungsquelle ferner eine Farbfolie aufweist, welche zwischen dem Leuchtmittel und dem Behälter angeordnet ist.

9. Verfahren nach einem der Ansprüche 1 bis 7, wobei die Strahlungsquelle mehrere Leuchtelemente, vorzugsweise LEDs, aufweist, welche ausgebildet sind Strahlung unterschiedlicher Wellenlängenbereiche zu emittieren.

10. Verfahren nach einem der vorherigen Ansprüche, wobei die Strahlungsquelle mindestens zwei horizontale Strahlungszonen oder mindestens zwei vertikale Strahlungszonen aufweist.

11. Verfahren nach einem der vorherigen Ansprüche, wobei die Detektionseinrichtung ausgebildet ist von jedem der zu untersuchenden Behälter Aufnahmen zu detektieren.

## Claims

1. Method for inspecting containers for contaminations and three-dimensional container structures, wherein the method comprises the following steps:
- providing a radiation source, wherein the radiation source is designed to emit radiation which radiates through a container to be examined, wherein the radiation source has several spatially separated radiation zones, and wherein the radiation zones are designed to emit radiation of different wavelength ranges,
- providing a detection element which is designed to detect the radiation that has been emitted by the radiation source and has radiated through the container,
- providing an evaluation element which is designed to evaluate the radiation detected by the detection element in terms of contamination of and damage to the container,
- emitting, through the radiation zones of the radiation source, radiation of different wavelength ranges, wherein the radiation radiates through the container to be examined,
- detecting, through the detection element, the radiation, wherein the radiation has been emitted by the radiation zones of the radiation source and has radiated through the container to be examined, and
- evaluating, through the evaluation element, the radiation detected by the detection element in terms of contamination of and damage to the container to be examined,
wherein a brightness contrast image and a colour contrast image are simultaneously created, and the evaluation element carries out a comparison of the brightness contrast image and the colour contrast image.

2. Method according to claim 1, wherein the evaluation is effected such that it is regarded as a contamination of a bottle when a contrast is identified in the brightness contrast image in one area of the pictures and no contrast is detected in the colour contrast image in the same area.

3. Method according to one of the preceding claims, wherein the evaluation is effected such that it is regarded as an embossing when a contrast is detected both in the brightness contrast image and in the colour contrast image in one area of the pictures.

4. Method according to one of the preceding claims, wherein the evaluation is effected such that it is regarded as a water droplet or a chip in the glass when no contrast is detected in the brightness contrast image in one area of the pictures, but a contrast is detected in the colour contrast image in the same area.

5. Method according to claim 4, wherein a distinction is made between a chip in the glass and a water droplet on the basis of the shape, size and symmetry of the contrast in the colour contrast image.

6. Method according to one of the preceding claims, wherein the radiation zones of the radiation source are designed to emit visible light, infrared radiation and/or ultraviolet radiation.

7. Method according to claim 6, wherein a first radiation zone of the radiation source is designed to emit visible red light, a second radiation zone of the radiation source is designed to emit visible green light, and a third radiation zone of the radiation source is designed to emit visible blue light.

8. Method according to one of the preceding claims, wherein the radiation source comprises a planar illuminant which is designed to emit substantially white visible light, and wherein the radiation source further comprises a colour film which is arranged between the illuminant and the container.

9. Method according to one of claims 1 to 7, wherein the radiation source comprises several lighting elements, preferably LEDs, which are designed to emit radiation of different wavelength ranges.

10. Method according to one of the preceding claims, wherein the radiation source has at least two horizontal radiation zones or at least two vertical radiation zones.

11. Method according to one of the preceding claims, wherein the detection element is designed to detect pictures of each of the containers to be examined.

## Revendications

1. Procédé d'inspection de récipients en ce qui concerne des contaminations et des structures tridimensionnelles de récipients, le procédé comprenant les étapes suivantes :
- mise à disposition d'une source de rayonnement, la source de rayonnement étant conçue pour émettre un rayonnement qui traverse un récipient à examiner, la source de rayonnement présentant plusieurs zones de rayonnement séparées dans l'espace et les zones de rayonnement étant conçues pour émettre un rayonnement de différentes longueurs d'onde,
- mise à disposition d'un dispositif de détection qui est conçu pour détecter le rayonnement émis par la source de rayonnement et qui a traversé le récipient,
- mise à disposition d'un dispositif d'évaluation qui est conçu pour évaluer le rayonnement détecté par le dispositif de détection en ce qui concerne des salissures et des dommages sur le récipient,
- émission, par les zones de rayonnement de la source de rayonnement, d'un rayonnement de différentes longueurs d'onde, le rayonnement traversant le récipient à examiner,
- détection, par le dispositif de détection, du rayonnement qui a été émis par les zones de rayonnement de la source de rayonnement et qui a traversé le récipient à examiner, et
- évaluation, par le dispositif d'évaluation, du rayonnement détecté par le dispositif de détection en ce qui concerne des salissures et des dommages sur le récipient à examiner,
dans lequel une image de contraste de luminosité et une image de contraste de couleur sont créées simultanément, et le dispositif d'évaluation effectue une comparaison entre l'image de contraste de luminosité et l'image de contraste de couleur.

2. Procédé selon la revendication 1, dans lequel l'évaluation est effectuée de telle sorte qu'il est considéré comme une contamination d'une bouteille lorsqu'un contraste est constaté dans l'image de contraste de luminosité dans une zone des prises de vue et qu'aucun contraste n'est détecté dans l'image de contraste de couleur dans la même zone.

3. Procédé selon l'une des revendications précédentes, dans lequel l'évaluation est effectuée de telle sorte qu'il est considéré comme un embossage lorsqu'un contraste est détecté à la fois dans l'image de contraste de luminosité et dans l'image de contraste de couleur dans une zone des prises de vue.

4. Procédé selon l'une des revendications précédentes, dans lequel l'évaluation est effectuée de telle sorte qu'il est considéré comme une goutte d'eau ou un éclat de verre lorsqu'aucun contraste n'est détecté dans l'image de contraste de luminosité dans une zone des prises de vue, mais qu'un contraste est détecté dans l'image de contraste de couleur dans la même zone.

5. Procédé selon la revendication 4, dans lequel une distinction entre un éclat de verre et une goutte d'eau est effectuée sur la base de la forme, de la taille et de la symétrie du contraste dans l'image de contraste de couleur.

6. Procédé selon l'une des revendications précédentes, dans lequel les zones de rayonnement de la source de rayonnement sont conçues pour émettre de la lumière visible, un rayonnement infrarouge et/ou un rayonnement ultraviolet.

7. Procédé selon la revendication 6, dans lequel une première zone de rayonnement de la source de rayonnement est conçue pour émettre de la lumière rouge visible, une deuxième zone de rayonnement de la source de rayonnement est conçue pour émettre de la lumière verte visible et une troisième zone de rayonnement de la source de rayonnement est conçue pour émettre de la lumière bleue visible.

8. Procédé selon l'une des revendications précédentes, dans lequel la source de rayonnement présente un moyen d'éclairage plat qui est conçu pour émettre une lumière visible essentiellement blanche, et dans lequel la source de rayonnement présente en outre un film de couleur qui est disposé entre le moyen d'éclairage et le récipient.

9. Procédé selon l'une des revendications 1 à 7, dans lequel la source de rayonnement présente plusieurs éléments lumineux, de préférence des LED, qui sont conçus pour émettre un rayonnement de différentes longueurs d'onde.

10. Procédé selon l'une des revendications précédentes, dans lequel la source de rayonnement présente au moins deux zones de rayonnement horizontales ou au moins deux zones de rayonnement verticales.

11. Procédé selon l'une des revendications précédentes, dans lequel le dispositif de détection est conçu pour détecter des prises de vue de chacun des récipients à examiner.
